# EUROPÄISCHE PATENTSCHRIFT

(11) **EP 1 610 018 B1**
(45) Veröffentlichungstag und Bekanntmachung des Hinweises auf die Patenterteilung: **30.09.2009**
(21) Anmeldenummer: 05011783.7
(22) Anmeldetag: 01.06.2005
(51) Int. Cl.: F16D 25/0638, F16D 48/02

(54) **Kupplung**
Clutch
Embrayage

(30) Priorität: 24.06.2004 DE 102004030660
(43) Veröffentlichungstag der Anmeldung: 28.12.2005
(73) Patentinhaber: BorgWarner, Inc., Auburn Hills, MI 48326-2872 (US)
(72) Erfinder: Heinrich, Johannes, Dr., 61381 Friedrichsdorf (DE); Hauck, Hans Jürgen, 74523 Schwäbisch Hall (DE); Schäfer, Michael, 68723 Schwetzingen (DE)
(74) Vertreter: Patentanwälte Westphal, Mussgnug & Partner

(56) Entgegenhaltungen:
- DE-A1- 10 049 474
- DE-A1- 19 821 164

## Beschreibung

Die Erfindung betrifft eine Kupplung in einem mit einem Fluid gefüllten geschlossenen Gehäuse, insbesondere eine Anfahrkupplung, gemäß dem Oberbegriff des Patentanspruchs 1.

Kupplungen in einem geschlossenen Gehäuse, von denen die Erfindung ausgeht, sind aus dem Stand der Technik in einer Vielzahl von Abwandlungen bekannt. Insbesondere lassen sich an Stelle von Hydrowandlern auch nasse Anfahrkupplungen in automatischen Fahrzeuggetrieben einsetzen, was vor allen Dingen Vorteile in der Dynamik (d.h. im Ansprechverhalten des Motors) und im Kraftstoffverbrauch bringt. Um einen Ersatz für den hydrodynamischen Wandler darzustellen, ohne größere Veränderungen an der Umgebung, d.h. des Getriebes und des Motors vorzunehmen, wird die nasse Anfahrkupplung - z.B. in Form einer Lamellenkupplung - in einem vergleichbaren geschlossenen Gehäuse untergebracht, wie ihn der Wandler darstellt. Derartige Kupplungen entnimmt man z. B. der DE 195 46 707 A1 oder der DE 199 17 893 A1.

Aus der DE 100 34 730 A1 ist eine Kupplung gemäß dem Oberbegriff des Patentanspruchs 1 bekannt.

Bei offenen Systemen, wie sie z. B. in der DE 100 49 474 A1, der DE 101 43 834 A1, der DE 100 34 677 A1, der DE 197 00 635 C2, der US 5,439,088 A oder der JP 08 200 393 A beschrieben sind, versucht man, die teilweise störenden Fliehkrafteinflüsse auf rotierende Betätigungskolben, nämlich Druckerhöhungen aufgrund des bei Rotation aufgrund der Fliehkraft nach außen geschleuderten zur Betätigung der Kupplung vorgesehenen Öls (der Begriff Öl wird hier synonym für jedes geeignete Fluid verwendet), durch die Bereitstellung entsprechender Kompensationsräume auszugleichen, in denen ein entsprechender Gegendruck erzeugt wird.

In einem geschlossenen Gehäuse, wie es bei der hier exemplarisch betrachteten Anfahrkupplung vorhanden ist, ist der hydraulisch angesteuerte Betätigungskolben, der für die Anpressung der Lamellen sorgt, prinzipiell dynamisch ausgeglichen, da er auf beiden Seiten von Öl umgeben ist, nämlich sowohl auf der mit Hilfe des Drucköls mit einem Betätigungsdruck beaufschlagbaren Seite, als auch auf der druckabgewandten Seite, auf der sich Kühlöl zur Kühlung der Reibflächen der Reibelemente (also z.B. bei einer Lamellenkupplung der Lamellen) befindet.

Bei einer Anfahrkupplung treten jedoch gerade beim Anfahrvorgang selbst Verhältnisse auf, die dazu führen, dass der Betätigungskolben nicht komplett bzgl. Fliehöleinflüssen ausgeglichen ist. Dies liegt daran, dass beim Anfahrvorgang die beiden Hälften des Systems mit verschiedenen Drehzahlen rotieren: Die antriebs- bzw. motorseitigen Komponenten rotieren mit Motordrehzahl, die abtriebs- bzw. getriebeseitigen mit der Abtriebsdrehzahl, welche innerhalb einer gewissen Zeit von Null bis auf Motordrehzahl ansteigt. Als Folge ist festzustellen, dass auf der motorseitigen Fläche des Betätigungskolbens höhere Fliehölkräfte wirken als auf der getriebeseitigen. Wenn der Betätigungskolben rotationsmäßig betrachtet auf der Getriebeseite angeordnet ist, wirkt sich dieser Effekt so aus, dass die höheren Kräfte aus dem motorseitigen Ölraum die effektive Anpresskraft des Betätigungskolbens in unerwünschter Weise reduziert und der Motor bei starkem Gasgeben auf zu große Drehzahlen kommt, weil er nicht rechtzeitig "eingefangen" werden kann. Aus diesem Grunde ist es vorteilhaft, den Betätigungskolben so anzuordnen, dass er rotationsmäßig betrachtet auf der Antriebsseite liegt, sich also mit Motordrehzahl bewegt. Dann führen die unausgeglichenen Effekte zumindest nicht zu einer Reduzierung des anliegenden Momentes, sondern sind sozusagen "selbstverstärkend". Diese selbstverstärkenden Effekte erfordern jedoch, um sehr feinfühlig das Drehmoment der Kupplung einregeln zu können, eine entsprechend kennfeldgesteuerte Regelung.

Nicht immer ist dies jedoch erwünscht, weshalb es Aufgabe der Erfindung ist, die unerwünschten Effekte weitgehend zu reduzieren.

Diese Aufgabe wird bei einer Kupplung der gattungsgemäßen Art durch die Merkmale des kennzeichnenden Teils des Patentanspruchs 1 gelöst.

Vorteilhafte Ausführungen und Weiterbildungen der Erfindung sind in den Unteransprüchen angegeben.

Die Erfindung geht ganz allgemein von einer Kupplung, insbesondere einer nasslaufenden Anfahrkupplung, mit Reibelementen aus, welche einen mit einer um eine Drehachse drehbare erste Antriebs- oder Abtriebswelle drehfest verbundenen Betätigungskolben und einen mit einer um eine Drehachse drehbare zweite Abtriebs- oder Antriebswelle drehfest verbundenen Innenlamellenträger aufweist, wobei der Betätigungskolben und der Innenlamellenträger einen Kühlölraum einschließen, über den die Reibelemente der Kupplung zur Kühlung mit Kühlöl versorgt werden. Erfindungsgemäß sind Mittel in Form einer Trennwand vorgesehen, welche den Kühlölraum in einen ersten dem Betätigungskolben zugeordneten Kühlölteilraum und einen zweiten dem Innenlamellenträger zugeordneten Kühlölteilraum aufteilen wobei Abdichtungen in einem bereich zwischen dem Betätigungskolben und der Trennwand als Spaltdichtungen ausgebildet sind. Der Betätigungskolben ist nunmehr beidseitig von Ölräumen umgeben, in denen das darin vorhandene Öl mit der Drehzahl des Betätigungskolbens dreht. Dies führt zu einem guten Fliehölausgleich, auch wenn eine hohe Differenzdrehzahl in der Kupplung vorliegt. Weiterhin trägt das Kühlöl aus beiden Kühlölteilräumen zur Kühlung der Kupplung bei.

Die Erfindung wird nunmehr anhand der Zeichnungen näher beschrieben. Es zeigen:
- Figur 1: ein erstes Ausführungsbeispiel einer erfindungsgemäßen Kupplung im Axialhalbschnitt,
- Figur 2: ein zweites Ausführungsbeispiel einer erfindungsgemäßen Kupplung im Axialhalbschnitt,
- Figur 3: ein drittes Ausführungsbeispiel einer erfindungsgemäßen Kupplung mit integriertem Torsionsschwingungsdämpfer im Axialhalbschnitt.

Die beiden ersten Ausführungsbeispiele sind in folgenden zunächst genannten Merkmalen im wesentlichen identisch ausgebildet.

Erfindungsgemäß ist in einem zur Kühlung der Kupplung 1 vorgesehenen Ölraum eine zusätzliche Trennung in Form einer Trennwand 13 oder eines Zylinders eingebracht. Damit wird der zwischen mit Motordrehzahl rotierendem Betätigungskolben 10 und mit Getriebedrehzahl rotierendem Innenlamellenträger 9 liegende Ölraum aufgeteilt in zwei Ölteilräume 23, 24. Der Betätigungskolben 10 ist nunmehr als Folge beidseitig von Ölräumen 23, 29 umgeben, die mit Motordrehzahl drehen, was zu einem guten Fliehölausgleich führt, auch wenn eine hohe Differenzdrehzahl in der Kupplung 1 vorliegt.

Um die Bewegung des Betätigungskolbens 10 nicht zu behindern, muss der als Kompensationsraum wirkende erste Ölteilraum 23 Öffnungen haben, die eine Ölverdrängung bei Betätigung ermöglichen. In den Beispielen sind hierfür Bohrungen 14 vorgesehen, die möglichst nahe an der Drehachse ax liegen sollten. Außerdem sind in den Ausführungsbeispielen die Abdichtungen in einem Bereich 15 zwischen Betätigungskolben 10 und Trennwand 13 als Spaltdichtungen ausgebildet, da es hier nicht auf Dichtheit, sondern auf eine niedrige Hysterese bei Betätigung ankommt.

Die Wirkung kann noch weiter verbessert werden, wenn die Trennwand 13 radial noch weiter nach außen geführt würde, und z.B. bis zu einem Kragen 30 des Betätigungskolbens 10 geführt würde, wo dieser gegen das Lamellenpaket 8 drückt. Allerdings steigt damit der materielle Aufwand noch stärker an, und auch der erforderliche axiale Bauraum würde größer.

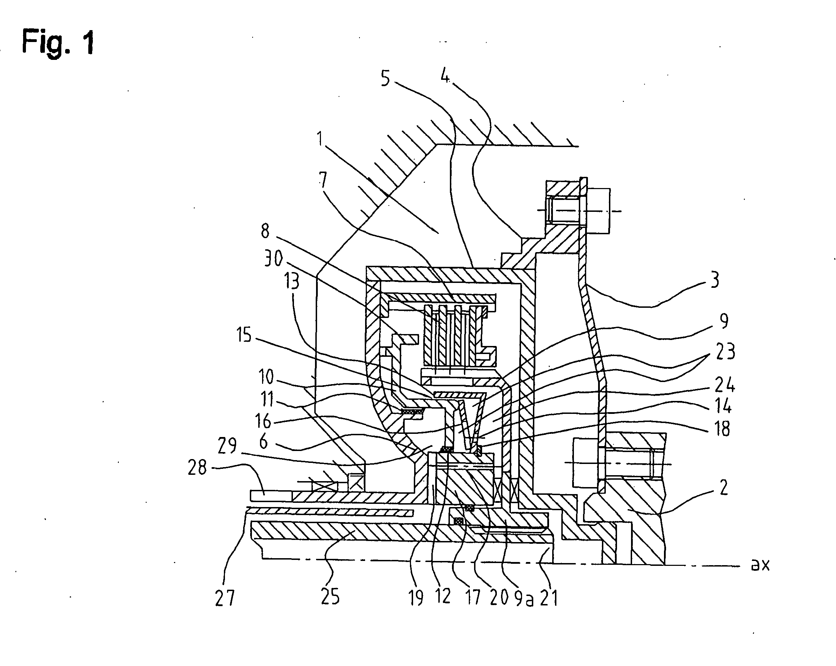

Fig. 1 stellt eine sogenannte 2-Kanal-Ausführung dar, bei welcher der Kühlölstrom über eine Blende bzw. Bohrung 20 vom Drucköl 19 abgezweigt wird.

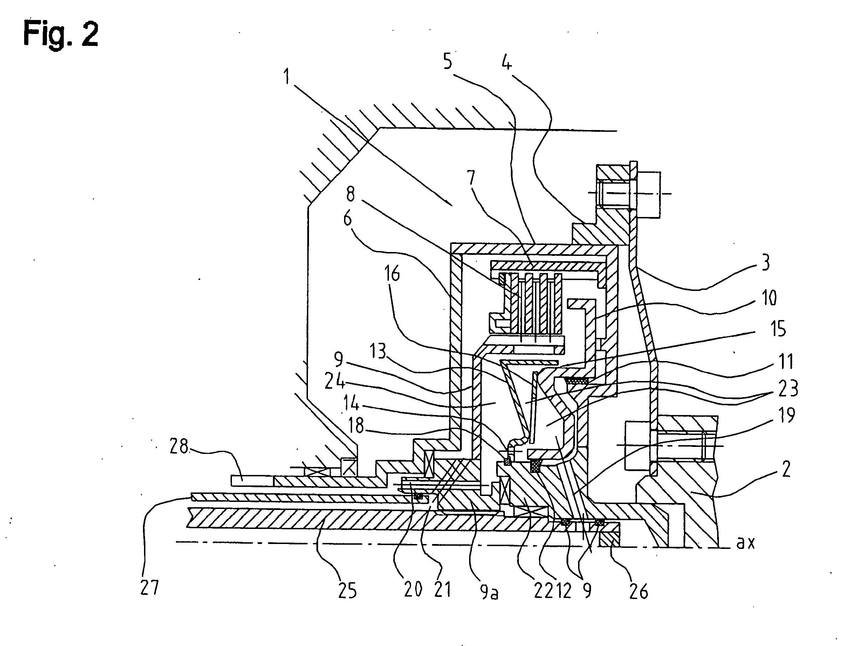

In Fig. 2 ist eine sogenannte 3-Kanal-Ausführung gezeigt, bei der für den Kühlölstrom zwei separate Kanäle 20 und 21 vorgesehen sind.

Für die Erfindung ist es nicht wesentlich, wie die Bauteile im einzelnen ausgebildet sind, sondern vor allem, dass überhaupt für eine zusätzliche Trennwand 13 in dem zum Kolben benachbarten Ölraum gesorgt wird, welcher beim Anfahrvorgang prinzipiell mit zwei verschiedenen Drehzahlen beaufschlagt wird.

Dieses Prinzip lässt sich auch einsetzen für Konstruktionsvarianten, bei denen der Betätigungskolben abtriebsseitig angebracht ist (hier nicht dargestellt), um oben genannte Effekte (Durchgehen des Motors) zu verhindern.

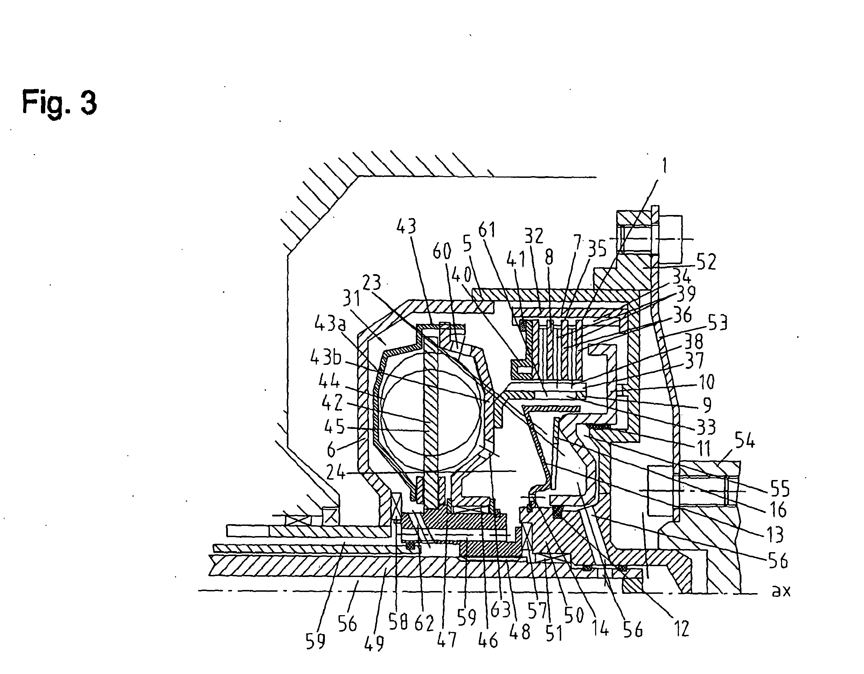

Die Figur 3 zeigt eine Anfahrkupplung 1 mit im selben geschlossenen Kupplungsgehäuse 5 integriertem Torsionsschwingungsdämpfer 31.

Die Anfahrkupplung 1 umfasst einen Außenlamellenträger 7 sowie einen Innenlamellenträger 9. Außenlamellenträger 7 und Innenlamellenträger 9 sind um eine Drehachse ax gegeneinander drehbar gelagert. Beide Lamellenträger 7, 9 sind in der Art von Halbschalen mit einem ringscheibenförmigen Bereich und einem zylindrischen Bereich 32, 33 ausgebildet. Der zylindrische Bereich 32 des Außenlamellenträgers 7 weist am Innenumfang eine Innenverzahnung 34 auf. In diese Innenverzahnung 34 greift jeweils eine entsprechende Außenverzahnung 35 von im vorliegenden Ausführungsbeispiel als Stahllamellen ausgeführten Außenlamellen 36 ein. In korrespondierender Weise weist der zylindrische Bereich 33 des Innenlamellenträgers 9 am Außenumfang eine Außenverzahnung 37 auf, in welche eine entsprechende Innenverzahnung 38 hier als Belaglamellen ausgeführter Innenlamellen 39 eingreift. Außenlamellen 36 und Innenlamellen 39 sind ein Lamellenpaket 8 bildend zwischen die zylindrischen Bereiche 32, 33 der Außen- bzw. Innenlamellenträger 7, 9 eingeführt, indem in axialer Richtung jeweils auf eine Außenlamelle 36 eine Innenlamelle 39 folgt und umgekehrt. Das Lamellenpaket 8 schließt einendseitig mit einer Endplatte 40 ab. Diese Endplatte 40 stützt sich wiederum andersseitig an einem Sicherungsring 41 am Außenlamellenträger 7 ab. Die Außen- und Innenlamellen 7, 9 des Lamellenpakets 8 sind mittels eines Betätigungskolbens 10 in Reibeingriff und außer Reibeingriff verbringbar.

Der Torsionsschwingungsdämpfer 31 ist ebenfalls in an sich bekannter Weise ausgebildet. Er umfasst ein Sekundärelement 42 in der Art einer Scheibe sowie ein Primärelement 43 mit im vorliegenden Ausführungsbeispiel zwei Halbschalen 43a, 43b, welche drehfest miteinander verbunden sind. Sekundär- und Primärelemente 42, 43 sind über eine Federeinrichtung miteinander gekoppelt. Sie sind um eine Neutralposition um die gemeinsame Drehachse ax gegeneinander verdrehbar. Das Primärelement 43 ist dabei mittels eines Radialnadellagers 46 an einer drehfest mit dem Sekundärelement 42 verbundenen Dämpfernabe 47 abgelagert. Die Federeinrichtung besteht im vorliegenden Ausführungsbeispiel aus einer Mehrzahl in Umfangsrichtung hintereinander angeordneter Schraubenfedern 44, welche mit Hilfe von sogenannten hier nicht dargestellten Gleitschuhen bzw. Federaufteilern voneinander beabstandet sind.

Sekundär- und Primärelemente 42, 43 umfassen jeweils in diametraler Anordnung zwei Mitnehmer 45, welche jeweils zwischen die in Umfangsrichtung verlaufende aus Schraubenfedern 44 bestehende Kette eingreifen, so dass ein antriebsseitig am Primärelement 43 anliegendes Drehmoment mittels eines Primärmitnehmers zunächst auf die Federkette aus Schraubenfedern 44 und von dort auf einen nicht dargestellten Sekundärmitnehmer 45 des Sekundärelements 42 übertragen wird.

Das Primärteilelement 43b des Torsionsschwingungsdämpfers 31 ist nunmehr drehfest mit dem Innenlamellenträger 9 der Anfahrkupplung 1 verbunden. Das Sekundärelement 42 bzw. genauer die Dämpfernabe 47, ist über eine Steckverzahnung 48 drehfest mit einer um die Drehachse ax drehbare Getriebeeingangswelle 49 verbunden. Auf dieser Getriebeeingangswelle 49 ist eine Kupplungsnabe 50 mittels eines Radialnadellagers 51 um die Drehachse ax drehbar gelagert. Die Kupplungsnabe 50 trägt in drehfester Verbindung eine Gehäusehalbschale 5. Diese Gehäusehalbschale 5 dient als Träger des Außenlamellenträgers 7. Die Dämpfernabe 47 stützt sich einseitig über ein Axialnadellager 57 an der Kupplungsnabe 50 und andersseitig über ein weiteres Axialnadellager 58 an einer weiteren Gehäusehalbschale 6 ab.

Weiterhin ist die Gehäusehalbschale 5 außenumfangsseitig mit einer Schwungmasse 52 drehfest verbunden. Diese Schwungmasse 52 ist außenumfangsseitig drehfest mit einer Scheibe 53 verbunden. Am Innenumfang der Scheibe 53 ist eine Antriebswelle 54 angeschraubt.

Die Gehäusehalbschale 5 bildet zusammen mit der weiteren Gehäusehalbschale 6 ein die Anfahrkupplung 1 und den Torsionsschwingungsdämpfer 31 umschließendes geschlossenes Gehäuse. Dieses geschlossene Gehäuse ist, wie in der Beschreibungseinleitung bereits eingehend dargelegt wurde, vollständig mit einem Fluid, z.B. dem sogenannten Kühlöl, befüllt. Über einen Fluidzuführungskanal 59 in der Dämpfernabe 47 kann dieses Fluid zugeführt werden. Öffnungen 60, 61, 63 im Primärelement 43 des Dämpfers 31 sowie im Innenlamellenträger 9 der Kupplung 1 erlauben eine weitgehend homogene Fluidverteilung. Über einen Fluidabführkanal 62 kann das Fluid wieder aus dem geschlossenen Gehäuse 5, 6 abgeführt werden.

Der Zeichnung entnimmt man, dass der Betätigungskolben 10 der Kupplung 1 an der Gehäusehalbschale 5 axial verschieblich geführt ist. Die Gehäusehalbschale 5 und der Betätigungskolben 10 schließen einen gegenüber der Umgebung mittels zweier Ringdichtungen 11, 12 abgedichteten Druckraum 55 ein, welcher über einen Fluidzuführungskanal 56 mit einem zum Betätigen des Betätigungskolbens 10 erforderlichen Fluid beaufschlagt werden kann.

Das Primärteilelement 43b, der Innenlamellenträger 9, der Betätigungskolben 10 und die Kupplungsnabe 50 schließen einen Fluidraum 23, 24 ein, über welchen die Lamellen 36, 39 der Kupplung 1 via die Öffnungen 61 mit Fluid versorgt werden. Erfindungsgemäß ist nunmehr eine Trennwand 13 vorgesehen, welche den Fluidraum 23, 24 in einen ersten dem Betätigungskolben 10 zugeordneten Fluidteilraum 23 und einen zweiten dem Innenlamellenträger 9 zugeordneten Fluidteilraum 24 aufteilt. Es sind Fluidverdrängungsöffnungen 14 vorgesehen, welche im radial inneren Bereich der Trennwand 13 einen Fluidaustausch zwischen den beiden Fluidteilräumen ermöglichen.

Der Boden der Trennwand 13 dient als Abstützeinrichtung für eine Tellerfeder 16, gegen welche sich der Betätigungskolben 10 abstützt.

### Bezugszeichenliste

- 1: Kupplung
- 2: Kurbelwelle
- 3: Flexplate
- 4: Montageauge
- 5: Gehäuse
- 6: Gehäuse
- 7: Außenlamellenträger
- 8: Lamellenpaket
- 9: Innenlamellenträger
- 9a: Abtriebsnabe
- 10: Betätigungskolben
- 11: Dichtung
- 12: Dichtung
- 13: Trennwand
- 14: Öffnung
- 15: Spalt
- 16: Tellerfeder
- 17: Nabe
- 18: Sicherungsring
- 19: Druckölzufuhr
- 20: Kühlölzufuhr
- 21: Kühlölrücklauf
- 22: Nabe
- 23: Ölsäule innerhalb Abschirmblech
- 24: Ölsäule außerhalb Abschirmblech
- 25: Getriebeeingangswelle
- 26: Verschluß
- 27: Statorwelle
- 28: Mitnehmerklaue für Pumpenantrieb
- 29: Druckraum
- 30: Kragen
- 31: Torsionsschwingungsdämpfer
- 32: zylindrischer Bereich
- 33: zylindrischer Bereich
- 34: Innenverzahnung
- 36: Außenlamellen
- 37: Außenverzahnung
- 38: Innenverzahnung
- 39: Innenlamellen
- 40: Endplatte
- 41: Sicherungsring
- 42: Sekundärelement
- 43: Primärelement
- 43a: Primärteilelement
- 43b: Primärteilelement
- 44: Schraubenfeder
- 45: Sekundärmitnehmer
- 46: Radialnadellager
- 47: Dämpfernabe
- 48: Steckverzahnung
- 49: Getriebeeingangsnabe
- 50: Kupplungsnabe
- 51: Radialnadellager
- 52: Schwungmasse
- 53: Scheibe
- 55: Druckraum
- 56: Fluidzuführungskanal
- 57: Axialnadellager
- 58: Axialnadellager
- 59: Fluidzuführungskanal
- 60: Öffnung
- 61: Öffnung
- 62: Fluidabführungskanal
- 63: Öffnung
- ax: Drehachse

## Patentansprüche

1. Kupplung in einem mit einem Fluid gefüllten geschlossenen Gehäuse, insbesondere nasslaufende Anfahrkupplung (1),
- mit Reibelementen (8, 36, 39)
- mit einem mit einer um eine Drehachse (ax) drehbare erste Antriebs- oder Abtriebswelle (2) drehfest verbundenen Betätigungskolben (10) und
- mit einem mit einer um eine Drehachse (ax) drehbare zweite Abtriebs- oder Antriebswelle (25) drehfest verbundenen Innenlamellenträger (9), wobei der Betätigungskolben (10) und der Innenlamellenträger (9) einen mit einem Fluid befüllten Fluidraum (23, 24) einschließen, wobei Mittell in Form einer Trennwand (13) vorgesehen sind, welche den Fluidraum (23, 24) in einen ersten dem Betätigungskolben (10) zugeordneten Fluidteilraum (23) und einen zweiten dem Innenlamellenträger (9) zugeordneten Fluidteilraum (24) aufteilen, wobei Abdichtungen zwischen dem Betätigungskolben, (10) der Trennwand (13) vorgesehen sind, **dadurch gekennzeichnet, dass** die Abdichtungen in einem Bereich (15) als Spaltdichtungen ausgebildet sind.

2. Kupplung nach Anspruch 1,
**dadurch gekennzeichnet, dass**
die Trennwand (13) eine im wesentlichen radial verlaufende Scheibe oder einen Zylinder mit im wesentlichen radial verlaufendem scheibenförmigem Boden aufweist.

3. Kupplung nach Anspruch 1 oder 2,
**dadurch gekennzeichnet, dass**
der erste Fluidteilraum Fluidverdrängungsöffnungen (14) aufweist.

4. Kupplung nach Anspruch 3,
**dadurch gekennzeichnet, dass**
die Fluidverdrängungsöffnungen (14) auf der der Drehachse (ax) zugeordneten Seite des ersten Fluidteilraums (23), insbesondere in einer den Fluidraum (23, 24) in einen ersten dem Betätigurigskolben (10) zugeordneten Fluidteilraum (23) und einen zweiten dem Innenlamellenträger (9) zugeordneten Fluidteilraum (24) aufteilenden Trennwand (13), angeordnet sind.

## Claims

1. Clutch in a closed housing filled with a fluid, in particular a wet running startup clutch (1),
- having friction elements (8, 36, 39),
- having an actuating piston (10) which is connected fixedly in terms of rotation to a first drive shaft or driven shaft (2) which can rotate about a rotational axis (ax), and
- having an inner multiple disc carrier (9) which is connected fixedly in terms of rotation to a second driven shaft or drive shaft (25) which can rotate about a rotational axis (ax), the actuating piston (10) and the inner multiple disc carrier (9) enclosing a fluid space (23, 24) filled with a fluid means (13) being provided in the form of a dividing wall which divide the fluid space (23, 24) into a first fluid part space (23) which is assigned to the actuating piston (10) and a second fluid part space (24) which is assigned to the inner multiple disc carrier (9), seals being provided between the actuating piston (10) and the dividing wall (13), **characterized in that** the seals are formed as gap seals in a region (15).

2. Clutch according to Claim 1, **characterized in that** the dividing wall (13) has a substantially radially extending disc or a cylinder having a substantially radially extending disc-shaped base.

3. Clutch according to Claim 1 or 2, **characterized in that** the first fluid part space has fluid expelling openings (14).

4. Clutch according to Claim 3, **characterized in that** the fluid expelling openings (14) are arranged on that side of the first fluid part space (23) which is assigned to the rotational axis (ax), in particular in a dividing wall which divides the fluid space (23, 24) into a first fluid part space (23) assigned to the actuating piston (10) and a second fluid part space (24) assigned to the inner multiple disc carrier (9).

## Revendications

1. Embrayage dans un boîtier fermé rempli d'un fluide, en particulier embrayage de démarrage humide (1), comprenant :
- des éléments de friction (8, 36, 39),
- un piston d'actionnement (10) connecté de manière solidaire en rotation à un premier arbre d'entraînement ou de sortie (2) pouvant tourner autour d'un axe de rotation (ax), et
- un support de lamelles interne (9) connecté de manière solidaire en rotation à un deuxième arbre de sortie ou d'entraînement (25) pouvant tourner autour d'un axe de rotation (ax), le piston d'actionnement (10) et le support de lamelles interne (9) renfermant un espace de fluide (23, 24) rempli d'un fluide,
des moyens en forme de paroi de séparation (13) étant prévus, lesquels divisent l'espace de fluide (23, 24) en un premier espace de fluide partiel (23) associé au piston d'actionnement (10) et en un deuxième espace de fluide partiel (24) associé au support de lamelles interne (9),
des garnitures d'étanchéité étant prévues entre le piston d'actionnement (10) et la paroi de séparation (13), **caractérisé en ce que** les garnitures d'étanchéité sont réalisées dans une région (15) sous forme de joints d'étanchéité à fente.

2. Embrayage selon la revendication 1,
**caractérisé en ce que**
la paroi de séparation (13) présente un disque s'étendant essentiellement radialement ou un cylindre, avec un fond en forme de disque s'étendant essentiellement radialement.

3. Embrayage selon la revendication 1 ou 2,
**caractérisé en ce que** le premier espace de fluide partiel présente des ouvertures de déplacement de fluide (14).

4. Embrayage selon la revendication 3,
**caractérisé en ce que** les ouvertures de déplacement de fluide (14) sont disposées du côté du premier espace de fluide partiel (23) tourné vers l'axe de rotation (ax), en particulier dans une paroi de séparation (13) divisant l'espace de fluide (23, 24) en un premier espace de fluide partiel (23) associé au piston d'actionnement (10) et un deuxième espace de fluide partiel (24) associé au support de lamelles interne (9).
